## Europäisches Patentamt

## European Patent Office

## Office européen des brevets

(19)

(11) Numéro de publication: **0 202 993**
**B1**

(12) **FASCICULE DE BREVET EUROPEEN**

(45) Date de publication du fascicule du brevet:
03.01.90

(51) Int. Cl.⁴: **F16D 55/224**

(21) Numéro de dépôt: 86400974.1

(22) Date de dépôt: 06.05.86

(54) **Ressort pour frein à disque.**

(30) Priorité: 22.05.85 FR 8507709

(43) Date de publication de la demande:
26.11.86 Bulletin 86/48

(45) Mention de la délivrance du brevet:
03.01.90 Bulletin 90/1

(84) Etats contractants désignés:
DE GB IT

(56) Documents cités:
EP-A- 0 002 399
EP-A- 0 030 502
EP-A- 0 059 128
DE-A- 1 927 459
DE-A- 2 345 733
DE-A- 2 514 383
FR-A- 2 408 766
GB-A- 1 532 572
GB-A- 2 056 601

(73) Titulaire: BENDIX France, 126, rue de Stalingrad,
F-93700 Drancy(FR)

(72) Inventeur: Mery, Jean-Claude, 61 rue Emile Zola,
F-93320 Pavillons Sous Bois(FR)

(74) Mandataire: Lejet, Christian et al, BENDIX FRANCE
Division Technique Service Brevets Bendix
Europe 126 rue de Stalingrad, F-93700 Drancy(FR)

ACTORUM AG

## Description

L'invention a pour objet un ressort pour frein à disque à étrier coulissant.

L'invention vise plus particulièrement un ressort à fonctions multiples destiné à équiper un frein à disque dont l'étrier coulisse par rapport à un support fixe au moyen d'au moins deux surfaces complémentaires de coulissement axial formées sur l'étrier et sur le support fixe et qui sont maintenues en contact par des moyens élastiques.

Parmi les freins à disque du type mentionné ci-dessus, on connaît les freins à disque dont l'étrier est monté coulissant par rapport au support fixe au moyen d'une colonnette axiale reçue en coulissement dans un alésage correspondant et au moyen de deux surfaces de coulissement formées en vis-à-vis sur l'étrier et sur le support fixe. Un tel frein est décrit et représenté dans le brevet GB-A-1 532 572. Dans un tel frein, 1 est nécessaire de prévoir des moyens élastiques pour maintenir lesdites surfaces en contact ainsi que des ressorts anti-bruit destinés à plaquer les organes de friction en appui dans l'ouverture prévue dans le support fixe pour les recevoir. Le document EP - A - 0 030 502 propose d'utiliser un ressort unique disposé entre l'étrier et les organes de friction assurant la double fonction de maintien en contact desdites surfaces de coulissement et de ressort anti-bruit pour les organes de friction.

Il existe également des freins à disque dont l'étrier est monté coulissant sur le support fixe au moyen de deux paires de surfaces de coulissement complémentaires formées respectivement sur l'étrier et sur le support fixe, lesdites paires de surfaces de coulissement étant maintenues en contact au moyen de deux ressorts disposés de part et d'autre du plan axial médian du frein. Un tel frein est décrit et représenté dans le document FR - A - 2 408 766. Dans un tel frein, il est de plus nécessaire de prévoir des ressorts anti-bruit pour les organes de friction afin de plaquer ces derniers en appui dans l'ouverture du support fixe dans laquelle ils sont reçus.

Dans les freins qui viennent d'être décrits, il peut être souhaitable de monter un type particulier d'organes de friction auquel il est nécessaire d'appliquer un effort tangentiel permanent, sollicitant ces organes de friction en appui dans l'ouverture du support fixe dans une position latérale préférentielle. Un tel type d'organes de friction est décrit et représenté dans le document EP - A - 0 002 399. On constate à la lecture de ce document qu'il est nécessaire de prévoir pour chacun des organes de friction un ressort indépendant sollicitant chaque organe dans sa position latérale préférentielle ainsi que les deux ressorts de maintien de l'étrier mentionné plus haut.

La demande de Modèle d'Utilité japonais N° 54088653 U publié le 21 JANVIER 1981, sous le N° JP-U-56-7130 (et correspondant au document GB - A - 2 056 601) décrit un ressort pour frein à disque monté dans un logement sous la voûte de l'étrier et coopérant avec les organes de friction pour solliciter ceux-ci radialement et tangentiellement afin d'assurer leur maintien dans une position latérale préférentielle. Dans ce document, le ressort présente une forme générale de V très ouvert à rebords d'extrêmité et est arc-bouté latéralement contre deux parois opposées du logement de voûte. Cet agencement se révèle donc sensible aux variations des dimensionnements du ressort et du logement de voûte ainsi qu'aux variations de tolérance des positions respectives des organes de friction et de l'étrier.

Le problème technique de la présente invention est de proposer l'agencement de freins à disque avec un ressort assurant les fonctions de ressort anti-bruit et de maintien en position latérale préférentielle des organes de friction, de structure simplifiée, compacte et robuste, peu sensible aux problèmes de tolérance, et assurant une action élastique améliorée sur les organes de friction, en assurant élastiquement le contact entre deux surfaces complémentaires de coulissement axial.

Ce problème est résolu conformément à l'invention par un ressort pour frein à disque tel qu'exposé dans la partie caractérisante de la revendication 1. Des modes particuliers de réalisation de l'invention apparaissent dans les revendications dépendantes.

Le document EP-A 0 059 128 décrit un ressort tel que défini dans la préambule de la revendication 1. Le ressort connu de ce document est disposé entre l'étrier et les plaques support des organes e friction et il exerce sur ces dernières un effort radial dirigé sensiblement selon un rayon du disque et en direction de l'axe de ce dernier et un effort tangentiel perpendiculaire audit effort radial pour solliciter chacun des organes de friction tangentiellement à la circonférence du disque pour assurer le maintien de ces derniers dans une position latérale préférentielle, le ressort sollicitant élastiquement l'étrier radialement vers l'extérieur pour assurer le maintien en contact des surfaces de coulissement. Le ressort est constitué d'une lame métallique pliée comportant deux bras principaux reliés par un pli central et un bras d'accrochage.

Avec un agencement, comme défini dans la revendication 1, l'action élastique du ressort résulte essentiellement des flexions relatives des trois bras reliés par le pli principal, sous l'effet de la coopération de ces bras avec les surfaces de l'étrier et des plaques supports placées à proximité les uns des autres. La patte portée par le pli principal assure le maintien en contact des deux surfaces de coulissement axial et positionne le ressort par rapport à l'étrier.

Selon une réalisation de l'invention, la distance entre le pli principal et le pli en forme de Z du bras central est telle que le ressort ne peut échapper de l'ouverture formée dans la voûte de l'étrier lorsque ce ressort n'agit pas sur les éléments de friction.

Avec un tel agencement, le ressort peut être maintenu élastiquement dans l'ouverture de l'étrier, sans risque de perte ou de déformation lors de démontage, par exemple, à l'occasion du remplacement des éléments de friction.

On décrira maintenant, à titre d'exemple, un ressort et une variante réalisés selon les enseignements de la présente invention, ainsi que leur application à un frein à disque, en se référant aux dessins annexés, dans lesquels :

- La Figure 1 représente un frein à disque muni d'un ressort réalisé selon la présente invention;
- La Figure 2 est une vue en coupe partielle, selon la ligne II-II de la Figure 1;
- La Figure 3 est une vue en coupe, selon la ligne III-III de la Figure 1;
- La Figure 4 est une vue agrandie d'un détail de la Figure 2 représentant l'implantation du ressort dans la voûte de l'étrier du frein à disque;
- La Figure 5 est une vue de dessus du ressort selon la présente invention à l'état libre;
- La Figure 6 est une vue en coupe, selon la ligne VI-VI du ressort de la Figure 5, vue dans le sens de la flèche A.
- La Figure 7 est une vue similaire à la Figure 6 d'une variante du ressort, objet de la présente invention;
- La Figure 8 est une vue de dessous, selon la flèche XIII du ressort de la Figure 7;
- La Figure 9 est une vue en coupe selon la direction IX-IX de la Figure 7.

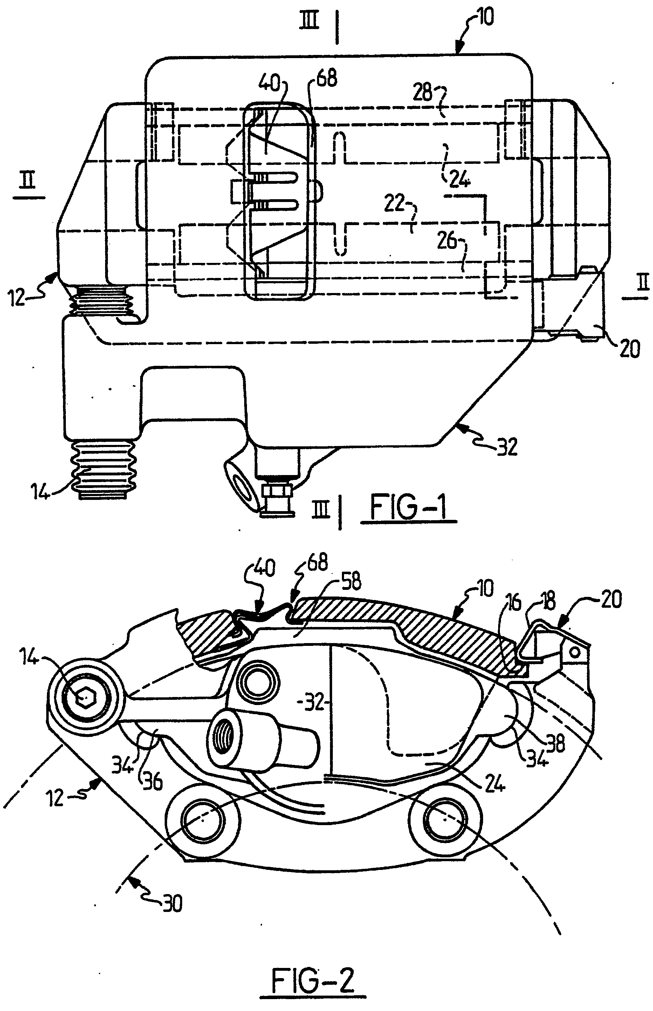

Le frein à disque représenté aux Figures 1 à 3 est du type comportant un étrier 10, monté coulissant sur un support fixe 12, au moyen d'une colonnette axiale 14. Le coulissement de l'étrier 10 par rapport au support fixe 12 est également assuré au moyen de surfaces de coulissement axial 16 et 18, formées respectivement sur l'étrier 10 et sur un ressort 20 solidaire du support fixe 12. Le frein à disque comporte en outre deux organes de friction 22 et 24 munis respectivement de plaques support 26 et 28, susceptibles de venir en engagement de friction avec un disque tournant 30, lors de l'actionnement d'un moteur hydraulique de frein 32. Les organes de friction 22 et 24 sont reçus en ancrage et en coulissement dans une ouverture 34 formée dans le support fixe 12. Dans l'exemple représenté, les deux organes de friction 22 et 24 ont des extrémités 36 et 38 possédant un profil circulaire coopérant avec des profils circulaires complémentaires de l'ouverture 34. Un tel type d'organes de friction est décrit et représenté plus en détail dans le brevet européen EP - A - 0 002 399. Pour ce type d'organes de friction, il est souhaitable d'exercer sur la plaque support un effort tangentiel qui maintienne cette dernière dans une position latérale préférentielle, en appui dans l'ouverture ménagée dans le support fixe 12.

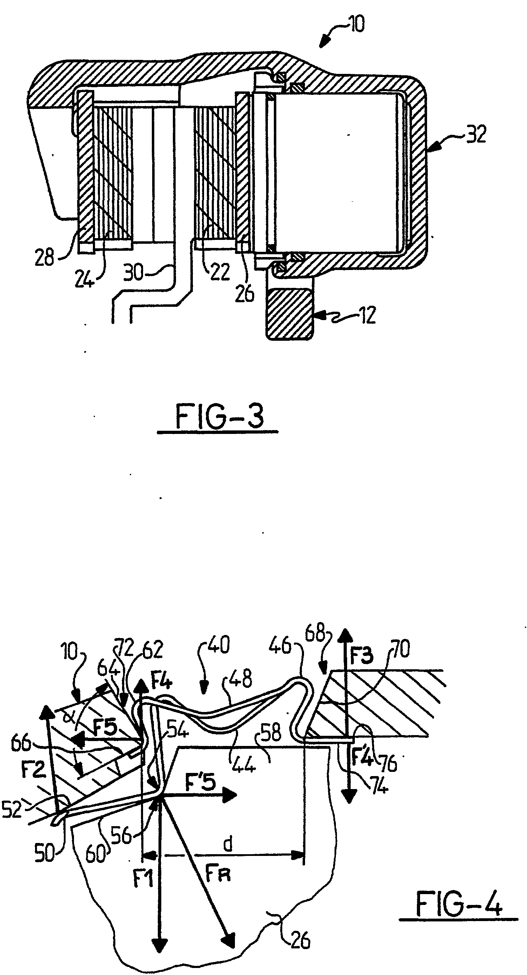

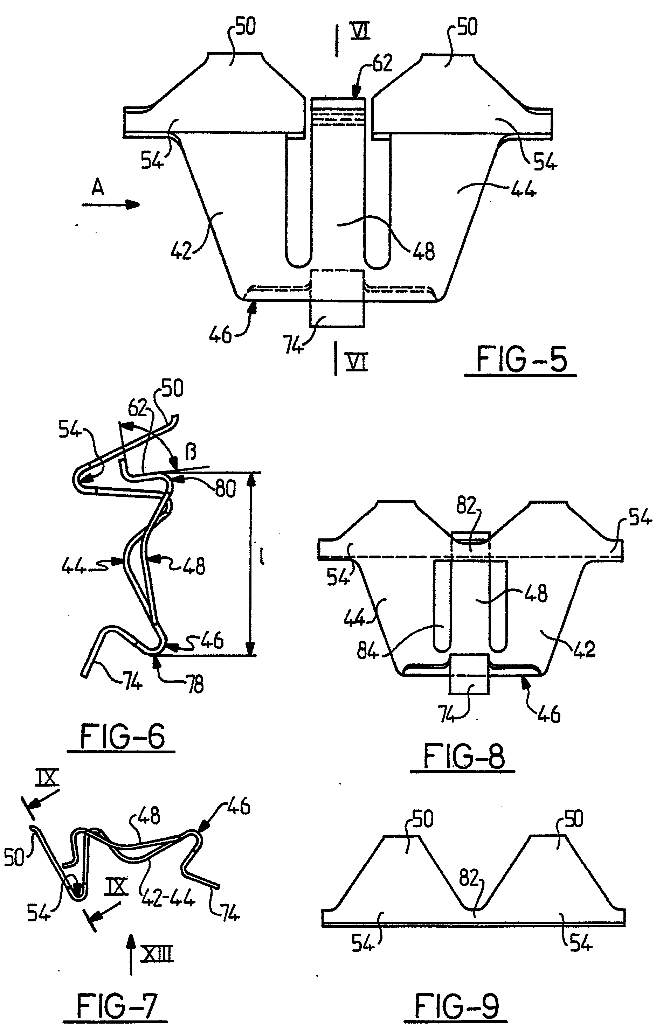

Le frein à disque représenté aux Figures 1 à 3 est muni d'un ressort 40 réalisé selon la présente invention. Pour la description du ressort 40, on se reportera notamment aux Figures 4 à 6. Le ressort 40 est constitué d'une lame métallique pliée qui comprend deux bras principaux 42 et 44, reliés entre eux par un pli principal 46, et reliés à un bras central 48, toujours au moyen du pli principal 46. Comme on le voit plus particulièrement sur la Figure 5, le ressort a la forme générale d'un "trident" dont les branches extrêmes sont constituées par les bras principaux 42 et 44, et la branche centrale par le bras central 48. Chacun des bras principaux comporte une extrêmité libre 50 susceptible de coopérer avec une surface sensiblement plane 52, comme représenté sur la Figure 4, de l'étrier coulissant 10, cette surface 52 s'étendant parallèlement à l'axe du disque 30. Chacun des bras 42 et 44 comporte une portion centrale 54 en forme de gouttière, susceptible de coopérer avec des surfaces d'appui 56 formées sur chacune des plaques support 26 et 28, comme représenté sur la Figure 4. Dans le mode de réalisation représenté, les surfaces d'appui 56 sont constituées par un angle d'appui formé sur un ergot 58, disposé à la partie supérieure des plaques support 26 et 28, et par la face supérieure 60 de ces plaques support. L'extrêmité libre 62 du bras central 48 présente un pli en forme de Z dont le creux le plus rapproché de l'extrêmité forme un angle β comme indiqué sur la Figure 6 entre deux parties consécutives du pli, cet angle β étant supérieur à l'angle α formé par deux surfaces 64 et 66, elles-mêmes formées sur l'étrier 10 et s'étendant parallèlement à l'axe du disque 30. En se reportant aux Figures 1, 2 et 4, on voit que le ressort 40 est logé dans une ouverture 68, formée dans la voûte de l'étrier 10 et comportant deux bords circonférentiellement espacés 70 et 72, les surfaces 52, 64 et 66 étant situées à proximité du premier bord 72. Le pli central 46 comporte une patte 74 qui s'étend sensiblement parallèlement aux trois bras 42, 44 et 48 en éloignement de ceux-ci, et susceptible de coopérer radialement avec une autre surface 76, formée sur l'étrier 10, à proximité du deuxième bord 68.

En se reportant aux Figures 1 et 5, on voit que les bras principaux 42 et 44 ont une section qui augmente progressivement depuis l'extrêmité libre 50 jusqu'à la portion centrale 54, puis la section décroit de la portion centrale 54 jusqu'au pli principal 46. En se reportant à la Figure 6, on voit que la surface extérieure 78 du pli principal 46 est éloignée d'une longueur l de la surface extérieure 81 du pli en forme de Z du bras central 48. En se reportant à la Figure 4, on définit d la distance minimale entre les bords circonférentiellement espacés 72 et 70 de l'ouverture 68. Selon l'invention, la longueur l sur le ressort 40, lorsque celui-ci ne sollicite pas les éléments de friction, est supérieure à la longueur d, de manière à ce que ledit ressort reste prisonnier dans l'ouverture 68 formée dans l'étrier 10. Par contre, lorsque le ressort 40 est dans sa position normale de fonctionnement, comme représenté sur la Figure 4, le pli principal 46 ne doit pas être au contact de l'étrier 10.

Sur la Figure 4, on a représenté les différentes actions élastiques engendrées ou subies par le ressort 40. On voit en particulier que les efforts tangentiels qui sollicitent les organes de friction tangentiellement à la circonférence du disque, sont engendrés par une flexion circonférentielle relative des bras principaux 42 et 44, par rapport au bras central 48. Ce sont les forces F5 sur le bras central 48 et F'5 exercées par les bras principaux sur les surfaces d'appui 56 des éléments de friction. Les valeurs de F5 et F'5 étant bien entendu égales. L'action radiale sur les éléments de friction est désignée par F1 et celle-ci est composée des réactions aux forces F2, effort de l'extrémité 50 sur la surfa-

ce 52, augmenté de l'effort F4, réaction du bras central 48 sur les surfaces 64 et 66, et augmenté de la résultante des deux forces opposées mais non égales F3 et F'4.

On constate donc que grâce à la structure du ressort, d'une part les éléments de friction sont bien soumis à une force radiale vers l'intérieur et une force tangentielle dans une direction préférentielle, et que les réactions à ces différentes forces (F2, F4, F3 - F'4) sollicitent l'étrier 10 radialement vers l'extérieur de manière à appliquer cet étrier 10 ou plus précisément, sa surface de coulissement 16, sur la surface de coulissement 18, solidaire du support fixe 12.

On voit également que grâce à l'invention, les efforts engendrés sont essentiellement définis par la géométrie du ressort, les tolérances de fabrication de l'étrier n'intervenant que très peu, la patte 74 étant libre de se déplacer circonférentiellement par rapport au bord 70 de l'ouverture 68.

Il est important que l'angle α précédemment défini soit plus petit que l'angle β formé par l'extrêmité en Z du bras central 48, de manière à permettre à ce bras central 48 de suivre les mouvements imposés par les portions centrales 54 au travers du pli principal 46.

C'est également pour permettre les déformations élastiques des trois bras 42, 44 et 48 et donc les mouvements du pli principal 46 qu'il est nécessaire qu'en position de fonctionnement, le pli principal 46 soit en éloignement du bord 70 de l'ouverture 68.

En se reportant aux Figures 7 à 9 qui représentent une variante au ressort selon les figures 4 à 6 on voit que les portions centrales 54 sont reliées entre elles au droit du pli en Z du bras central 48 au moyen d'une portion de liaison 82 formée lors du découpage du bras central 48 au moyen d'une ouverture 84, cette dernière étant telle que avant pliage des bras 42, 44 et 48, la longueur dépliée du bras central 48 est plus courte que la longueur correspondante de l'ouverture 84. Grâce à cette variante la rigidité des portions centrales 54 est accrue et celles-ci sont mieux maintenues parallèlement à l'axe du disque 30.

On comprend que grâce à l'invention, on a réalisé un ressort multi-fonctions simple et ne nécessitant pas de précisions particulières dans les usinages de l'étrier 10, les efforts étant essentiellement engendrés par des déplacements relatifs des bras les uns par rapport aux autres.

**Revendications**

1. Ressort (40) pour frein à disque du type comportant un étrier (10) monté coulissant parallèlement à l'axe d'un disque tournant (30) sur un support fixe (12) au moyen d'au moins deux surfaces (16, 18) de coulissement axial formées sur l'étrier (10) et sur le support fixe (12) et maintenues élastiquement (20) en contact, et deux organes de friction (22, 24) reçus en ancrage et en coulissement axial dans une ouverture (34) dudit support fixe, pour venir en engagement de friction avec les faces opposées dudit disque lors de l'actionnement d'un moteur de frein (32), ledit ressort étant monté élastiquement dans une ouverture (68) formée dans la voûte de l'étrier et exerçant sur les plaques support (26, 28) desdits organes de friction (22, 24) un effort radial (F1) dirigé sensiblement selon un rayon du disque (30) et en direction de l'axe de ce dernier, et un effort tangentiel (F'5) perpendiculaire audit effort radial (F1) pour solliciter chacun des organes de friction (22, 24) tangentiellement à la circonférence dudit disque, pour assurer le maintien de ces derniers dans une position latérale préférentielle, ledit ressort (40) qui est constitué d'une lame métallique comportant deux bras principaux (42, 44) reliés entre eux et à un bras central (48) au moyen d'une patte (74) s'étendant parallèlement auxdits trois bras (42, 44 et 48) et en éloignement de ceux-ci, cette lame présentant la forme générale d'un "trident" dont les branches extrêmes sont constituées par lesdits bras principaux (42, 44), ces derniers étant susceptibles de coopérer d'une part par leurs extrémités libres (50) avec une surface (52) sensiblement plane formée sur l'étrier (10) et s'étendant parallèlement à l'axe du disque (30), et d'autre part par des portions centrales (54) avec des surfaces d'appui (56) formées sur chacune des plaques support, ladite patte étant susceptible de coopérer radialement avec une autre surface (76) formée sur ledit étrier (10), ledit bras central (48) présentant à son extrémité libre (62) un pli en forme de Z susceptible de coopérer avec deux surfaces (64, 66) de l'étrier, et ladite surface d'appui (56) formée sur chacune desdites plaques support (26, 28) étant constituée par un angle d'appui formé sur un ergot (58) disposé à la partie supérieure desdites plaques support (26, 28) et par la face supérieure (60) de cette dernière, lesdites portions centrales (54) prenant appui dans ledit angle d'appui, et lesdites portions centrales (54) étant pliées en gouttières, la surface extérieure de la gouttière prenant appui dans ledit angle d'apui (56), ledit ressort étant caractérisé en ce que lesdites surfaces (52, 64, 66) sont situées à proximité d'un premier bord (72) de ladite ouverture (68) s'étendant axialement, l'autre surface (76) étant située à proximité du second bord (70) de ladite ouverture (68) et espacé circonférentiellement dudit premier bord (72) en ce que entre la patte (74) et les bras (42, 44 et 48) s'étend un pli principal (46) arrangé en éloignement du bord (70) de l'ouverture (68) pour permettre les déformations élastiques des trois bras (42, 44 et 48) et en ce que l'étrier forme un angle α inférieur à un angle β formé par deux parties consécutives du pli en forme de Z.

2. Ressort pour frein à disque selon la revendication 1, caractérisé en ce que au moins un desdits bras principaux (42, 44) possède une section augmentant depuis ladite extrémité (50) jusqu'à ladite portion centrale (54).

3. Ressort pour frein à disque selon l'une des revendications 1 ou 2, caractérisé en ce que au moins un desdits bras principaux (42, 44) possède une section diminuant depuis la portion centrale (54) jusqu'au pli principal (46).

4. Ressort pour frein à disque selon l'une des revendications précédentes, caractérisé en ce que le pli principal (46) a la forme d'une gouttière dont la surface extérieure (78) est éloignée de la surface extérieure (80) du pli en forme de Z du bras central (48) d'une longueur (1) supérieure à la distance minimale (d) des bords circonférentiellement espacés (72, 70) de ladite ouverture (68) lorsque lesdites portions centrales (54) sont libres de toute action sur lesdites surfaces d'appui (56).

5. Ressort pour frein à disque selon l'une des revendications précédentes, caractérisé en ce que les deux bras principaux (42, 44) sont reliés entre eux au niveau des portions centrales (54) par une portion de liaison (82) venue de matière avec le ressort.

## Claims

1. Spring (40) for a disc brake of the type comprising a caliper (10) slideably mounted parallel to the axis of a rotating disc (30) on a stationary support (12) by means of at least two axially sliding surfaces (16, 18) formed on the caliper (10) and on the stationary support (12) and held elastically (20) in contact, and two friction components (22, 24) which are anchored and slide axially in an opening (34) of the said stationary support, so as to come into friction engagement with the opposite sides of the said disc when a brake actuator (32) is operated, the said spring being mounted elastically in an opening (68) formed in the arch of the caliper and exerting on the support plates (26, 28) of the said friction components (22, 24) a radial force (F1) directed substantially along a radius of the disc (30) and in the direction of the axis of the latter, and a tangential force (F'5) perpendicular to the said radial force (F1) so as to stress each of the friction components (22, 24) tangentially to the circumference of the said disc in order to ensure that the latter are held in a preferred lateral position, the said spring (40) which consists of a metal leaf comprising two main arms (42, 44) connected to each other and to a central arm (48) by means of a lug (74) extending parallel to the said arms (42, 44 and 48) and away from the latter, this leaf having the general shape of a "trident", the end prongs of which comprise the said main arms (42, 44), the latter being capable of cooperating, on the one hand, by means of their free ends (50), with a substantially flat surface (52) formed on the caliper (10) and extending parallel to the axis of the disc (30) and, on the other hand, by means of central portions (54), with bearing surfaces (56) formed on each of the support plates, the said lug being capable of cooperating radially with another surface (76) formed on the said caliper (10), the said central arm (48) having at its free end (62) a Z-shaped fold capable of cooperating with two surfaces (64, 66) of the caliper, and the said bearing surface (56) formed on each of the said support plates (26, 28) consisting of a bearing angle formed on a projection (58) arranged at the top of the said support plates (26, 28) and, of the upper surface (60) of the latter, the said central portions (54) resting within the said bearing angle, and the said central portions (54) being folded so as to form gutters, the external surface of the gutter resting within the said bearing angle (56), the said spring being characterized in that the said surfaces (52, 64, 66) are situated in the vicinity of a first edge (72) of the said opening (68) extending radially, the other surface (76) being situated in the vicinity of the second edge (70) of the said opening (68) and arranged circumferentially at a distance from the said first edge (72), in that between the lug (74) and the arms (42, 44 and 48) there extends a main fold (46) arranged away from the edge (70) of the opening (68) so as to allow elastic deformation of the three arms (42, 44 and 48) and in that the caliper forms an angle α smaller than the angle β formed by two consecutive parts of the Z-shaped fold.

2. Spring for a disc brake according to Claim 1, characterized in that at least one of the said main arms (42, 44) has a cross-section increasing from the said end (50) to the said central portion (54).

3. Spring for a disc brake according to either of Claims 1 or 2, characterized in that at least one of the said main arms (42, 44) has a cross-section decreasing from the central portion (54) to the main fold (46).

4. Spring for a disc brake according to one of the preceding claims, characterized in that the main fold (46) has the shape of a gutter, the external surface (78) of which is separated from the external surface (80) of the Z-shaped fold of the central arm (48) by a distance (l) greater than the minimum distance (d) between the circumferentially spaced edges (72, 70) of the said opening (68) when the said central portions (54) are not acting in any way on the said bearing surfaces (56).

5. Spring for a disc brake according to one of the preceding claims, characterized in that the two main arms (42, 44) are connected to each other in the region of the central portions (54) by a connecting portion (82) forming a single piece with the spring.

## Patentansprüche

1. Feder für eine Scheibenbremse (40) vom Typ mit einem Sattel (10), der parallel zur Achse einer Drehscheibe (30) auf einem festen Träger (12) mittels wenigstens zweier Axialverschiebungsoberflächen (16, 18) verschiebbar angebracht ist, die auf dem Sattel (10) und auf dem festen Träger (12) ausgebildet sind und elastisch (20) in Kontakt gehalten werden, und mit zwei Reibungsteilen (22, 24), die in einer Öffnung (34) dieses festen Trägers verankert und axial verschiebbar aufgenommen werden, um bei Betätigung eines Bremsmotors (32) mit den gegenüberliegenden Flächen dieser Scheibe in Reibungseingriff zu kommen, wobei diese Feder elastisch in eine in der Sattelwölbung gebildete Öffnung (68) eingebaut ist und auf die Trägerplatten (26, 28) dieser Reibungsteile (22, 24) eine etwa nach einem Radius der Scheibe (30) und in Richtung deren Achse ausgerichtete Radialkraft (F1) und senkrecht zu dieser Radialkraft (F1) eine Tangentialkraft (F'5) ausübt, um jedes dieser Reibungsteile (22, 24) tangential zum Umfang dieser Scheibe zu beaufschlagen, damit diese Teile in einer bevorzugten Seitenlage gehalten werden, wobei diese Feder (40), die aus einem Metallblatt besteht, zwei Hauptarme (42, 44) aufweist, die untereinander und mit einem Mittelarm (48) mittels einer Klaue (74) verbunden sind, die sich parallel zu diesen drei Armen (42, 44 und 48) und von diesen entfernend erstreckt und die allgemeine Form eines "Dreizacks" aufweist, dessen äußere Zacken durch diese Hauptarme (42, 44) gebildet werden, wobei letztere dazu geeignet sind, einerseits durch ihre freien Enden (50) mit einer etwa flachen Oberfläche (52) zusammenzuwirken, die auf dem Sattel (10) ausgebildet ist und sich parallel zur Achse der Scheibe (30) erstreckt, und andererseits durch mittlere Partien (54) mit auf jeder der Trägerplatten ausgebildeten Auflageflächen (56), wobei diese Klaue dazu geeignet ist, radial mit einer anderen auf diesem Sattel (10) ausgebildeten anderen Oberfläche (76) zusammenzuwirken und dieser Mittelarm (48) an seinem freien Ende (62) eine Z-förmige Biegung aufweist, die dazu geeignet ist, mit zwei Oberflächen (64, 66) des Sattels zusammenzuwirken, und wobei diese auf jeder dieser Trägerplatten (26, 28) ausgebildete Auflagefläche (56) durch einen Auflagewinkel gebildet wird, der auf einem Ansatz (58) ausgebildet ist, der am Oberteil dieser Trägerplatten (26, 28) angeordnet ist, sowie durch die obere Fläche (60) dieses Oberteils, wobei diese mittleren Partien (54) sich auf diesem Auflagewinkel abstützen und diese mittleren Partien (54) rinnenförmig gebogen sind, wobei die Außenfläche der Rinne sich auf diesem Auflagewinkel (56) abstützt und diese Feder dadurch gekennzeichnet ist, daß diese Oberflächen (52, 64, 66) in der Wähe eines ersten Randes (72) dieser sich axial erstreckenden Öffnung (68) gelegen sind, wobei die andere Oberfläche (76) in der Nähe des zweiten Randes (70) dieser Öffnung (68) gelegen ist und in Umfangsrichtung von diesem ersten Rand (72) beabstandet liegt, dadurch, daß sich zwischen der Klaue (74) und den Armen (42, 44 und 48) ein Hauptknick (46) erstreckt, der sich vom Rand (70) der Öffnung (68) entfernend angeordnet ist, um die elastischen Verformungen der drei Arme (42, 44 und 48) zu gestatten, und dadurch, daß der Sattel einen Winkel $\alpha$ bildet, der niedriger als ein Winkel $\beta$ ist, der durch zwei aufeinanderfolgende Teile des Z-förmigen Knicks gebildet wird.

2. Scheibenbremsenfeder nach Anspruch 1, dadurch gekennzeichnet, daß wenigstens einer dieser Hauptarme (42, 44) einen Querschnitt besitzt, der von diesem Ende (50) ab bis zu dieser mittleren Partie (54) hin zunimmt.

3. Scheibenbremsenfeder nach einem der Ansprüche 1 oder 2, dadurch gekennzeichnet, daß wenigstens einer dieser Hauptarme (42, 44) einen Querschnitt besitzt, der von der mittleren Partie (54) bis zum Hauptknick (46) hin abnimmt.

4. Scheibenbremsenfeder nach einem der vorausgehenden Ansprüche, dadurch gekennzeichnet, daß der Hauptknick (46) die Form einer Rinne hat, deren Außenfläche (78) von der Außenfläche (80) des Z-förmigen Knicks des Mittelarms (48) um eine Länge (1) entfernt ist, die größer als die Mindestentfernung (d) der im Umfang auseinanderliegenden (72, 70) Ränder dieser Öffnung (68) ist, wenn diese mittleren Partien (54) frei von jeglicher Einwirkung auf diese Auflageflächen (56) sind.

5. Scheibenbremsenfeder nach einem der vorausgehenden Ansprüche, dadurch gekennzeichnet, daß die beiden Hauptarme 42, 44) untereinander bei den mittleren Partien (54) durch ein angeformtes Verbindungsteil (82) verbunden sind

FIG-1

FIG-2

FIG-3

FIG-4

FIG-5

FIG-6

FIG-8

FIG-7

FIG-9